# DEMANDE DE BREVET EUROPEEN

(11) **EP 1 507 443 A1**
(43) Date de publication de la demande: **16.02.2005**
(21) Numéro de dépôt: 04292026.4
(22) Date de dépôt: 11.08.2004
(51) Int. Cl.: H05B 33/08

(54) **Dispositif d'alimentation de sources lumineuses par la décharge de condensateurs**

(30) Priorité: 12.08.2003 FR 0309843
(71) Demandeur: Durand, Roger Tiburce Louis, 92170 Vanves (FR); Durand, Jean-Michel Roger, 8044 Gockhausen (CH)
(72) Inventeur: Durand, Roger Tiburce Louis, 92170 Vanves (FR); Durand, Jean-Michel Roger, 8044 Gockhausen (CH)
(74) Mandataire: Vander-Heym, Serge

(57) **Abrégé**

Dispositif d'alimentation de sources lumineuses (1), telles que des diodes électroluminescentes, à partir de condensateurs (2) chargés par l'entremise d'une cellule solaire (3), caractérisé en ce que dans le circuit cellule-condensateurs est interposé un interrupteur constitué par un transistor (4) dont la polarisation est obtenue par l'intermédiaire d'un pont résistance (6) -diode Zener (5), le seuil de déclenchement de ladite diode étant inférieur à la tension maximale susceptible d'être délivrée par la cellule solaire (3).

La tension aux bornes de la cellule est appliquée à un circuit logique (10) qui compare celle-ci à une valeur prédéterminée et commande la fermeture de l'interrupteur (7) d'alimentation des sources lumineuses (1 ) si la valeur de la tension aux bornes de ladite cellule tombe en dessous de ladite valeur prédéterminée.

## Description

La présente invention est relative à des perfectionnements au mode d'alimentation de sources lumineuses telles que des diodes électroluminescentes.

De telles diodes sont utilisées, notamment, pour la signalisation routière et, dans une telle application, on comprend qu'il soit nécessaire compte tenu des distances importantes qui séparent les diodes ou les groupes de diodes de s'affranchir de toutes lignes de transport d'énergie.

Dans le brevet français N° 2790060 déposé le 23/09/99, il est préconisé d'utiliser l'énergie solaire qui, à travers une cellule solaire, charge des condensateurs. La nuit, les condensateurs se déchargent en alimentant les diodes.

Compte tenu des caractéristiques spéciales des composants utilisés (cellules solaires et condensateurs) les résultats escomptés n'ont jamais été obtenus de façon satisfaisante.

Le but de l'invention est de réaliser un dispositif d'alimentation susceptible de fonctionner dans de bonnes conditions.

Il faut rappeler que, si on connecte un condensateur déchargé directement aux bornes d'une cellule soumise à un niveau d'éclairement normal, l'intensité s'établira à sa valeur maximale, mais la tension sera pratiquement nulle. Cette tension étant très faible, le produit tension-intensité qui caractérise l'énergie transmise par unité de temps sera faible et le temps nécessaire pour charger le condensateur sera très long. Il sera surtout trop long pour être compatible avec l'emploi envisagé : charge pendant les heures claires et décharge pendant les heures sombres ces dernières étant, en général, en nombre plus élevé que les premières.

Le problème posé consiste donc à créer aux bornes de la cellule un circuit, incorporant le condensateur, ayant une impédance telle que le produit de la valeur de la tension appliquée audit condensateur par celle de l'intensité du courant traversant ce dernier présente une valeur significative.

Selon l'invention, ce résultat est obtenu en interposant dans le circuit cellule-condensateur un interrupteur constitué par un transistor dont la polarisation est obtenue par l'intermédiaire d'un pont résistance-diode Zener, le seuil de déclenchement de ladite diode étant inférieur à la tension maximale susceptible d'être délivrée par ladite cellule.

Lorsque le seuil de déclenchement de la diode Zener est atteint, le courant dans cette dernière est limité à une valeur déterminée pour permettre au courant de charge du condensateur d'être maximal.

Lorsque la cellule est normalement éclairée, le condensateur, déchargé, est donc mis en charge sous une tension qui est au plus égale à celle de déclenchement de la diode Zener et est traversé par un courant qui est, sensiblement, égal à celui maximal susceptible d'être délivré par la cellule, diminué de la valeur du courant traversant la résistance.

Un autre problème posé, consiste à alimenter les sources lumineuses, à partir du condensateur, lorsque la luminosité ambiante devient insuffisante et, ce, en adaptant, au mieux la consommation d'énergie.

Selon l'invention, les sources sont connectées aux bornes du condensateur avec interposition d'un dispositif de connexion placé sous la dépendance d'un dispositif sensible à la luminosité ambiante et qui maintient ledit dispositif de connexion ouvert tant que la luminosité ambiante est suffisante.

Selon une autre caractéristique de l'invention, le dispositif précité comporte des moyens permettant de maintenir le dispositif de connexion fermé si la luminosité ambiante augmente durant un espace de temps bref, c'est le cas, notamment, lorsque la cellule est éclairée par les phares d'un véhicule qui passe.

Des moyens sont prévus pour régler la consommation d'énergie. A cet effet, l'alimentation des diodes s'effectue par l'entremise d'un dispositif permettant le clignotement de ces dernières et d'un dispositif permettant de faire varier le temps d'éclairement et le temps d'extinction.

La présente invention sera mieux comprise par la description qui va suivre faite en se référant au dessin annexé à titre d'exemple indicatif seulement sur lequel ;
- la figure 1 montre le schéma du dispositif ;
- la figure 2 montre un autre mode de réalisation.

En se reportant aux dessins, on voit que le problème à résoudre consiste à alimenter, durant les heures sombres, des sources lumineuses 1, telles que des diodes électroluminescentes, à partir d'un condensateur 2 (ou d'une batterie de condensateur) chargé durant les heures claires par une cellule solaire 3.

Le problème ci-dessus se scinde en deux le premier consistant à charger le condensateur 2 et le second consistant à allumer les diodes 1. Un troisième problème se greffe sur le second, consistant à régler la quantité d'énergie dépensée en fonction de celle disponible.

Pour charger le condensateur, on interpose dans le circuit un interrupteur électronique tel qu'un transistor 4 dont la polarisation est obtenue par l'intermédiaire du pont constitué par une diode Zener 5 et une résistance 6. La diode Zener est choisie de façon à ce que son seuil de déclenchement (valeur de la tension au-delà de laquelle elle est conductrice) soit inférieur à la tension maximale susceptible d'être délivrée par la cellule 3.

Lorsque la cellule est normalement éclairée, le condensateur déchargé 2 est donc mis en charge sous une tension qui est, au plus égale à celle de déclenchement de la diode 5 et est traversé par un courant qui est, sensiblement, égal à celui maximal susceptible d'être délivré par la cellule, diminué de la valeur du courant traversant la résistance 6.

Lorsque l'éclairement ambiant est suffisant, le circuit condensateur 2-diodes 1 est ouvert et, à cet effet, un interrupteur électronique est interposé dans ce dernier. Selon un mode de réalisation, cet interrupteur est constitué par un transistor 7 dont la base est normalement bloquée tant que l'éclairement ambiant est suffisant.

Il faut signaler que le transistor 7 peut commander un dispositif d'un type connu permettant de faire clignoter les diodes et, ce, dans un souci d'économie d'énergie. Ce dispositif sera décrit ultérieurement.

Lorsque la luminosité ambiante baisse, la tension aux bornes de la cellule baisse et en dessous d'une certaine valeur, on convient qu'il est temps d'allumer les diodes.

Ce résultat est obtenu en plaçant aux bornes de la cellule 3 deux résistances 8 et 9, la tension aux bornes de la résistance 9 est donc l'image de la luminosité extérieure et elle est appliquée à un circuit intégré 10, d'un type connu ou par tout circuit apte à remplir les fonctions ci-dessous.

Tant que la tension aux bornes de la résistance 9 reste supérieure à une valeur prédéterminée, le circuit intégré 10 maintient le blocage du transistor 7, puisque cela signifie que la luminosité ambiante est suffisante.

Dès que la tension aux bornes de la résistance 9 descend en dessous de cette valeur prédéterminée, le circuit intégré débloque le transistor 7, les diodes 1 sont alors alimentées par le condensateur 2.

Cette situation perdure tant que la luminosité ambiante est insuffisante, mais elle peut être perturbée par des sources parasites de lumière : les phares des véhicules par exemple.

Selon l'invention, on remédie à cet inconvénient en utilisant un dispositif annexe qui s'oppose au blocage du transistor 7, si la tension aux bornes de la résistance 9 remonte au-dessus de celle prédéterminée de basculement durant un bref instant.

Selon un mode de réalisation, la tension aux bornes de la résistance 9 est amplifiée et charge, par l'entremise d'une résistance 11, un condensateur 1 2 dont la tension est utilisée pour bloquer, à travers le circuit intégré, le transistor 7.

Lorsque la tension aux bornes de la résistance 9 descend en dessous du seuil fixé, le condensateur 1 2 se décharge et le transistor 7 se débloque.

C'est le schéma normal de fonctionnement du dispositif lors des alternances jour-nuit.

Lorsque la cellule est éclairée de façon très courte, le condensateur 12 n'a pas le temps de se recharger et il ne peut donc pas bloquer le transistor 7. De cette façon, on évite que lors du passage des véhicules, les phares de ceux-ci provoquent l'extinction des diodes.

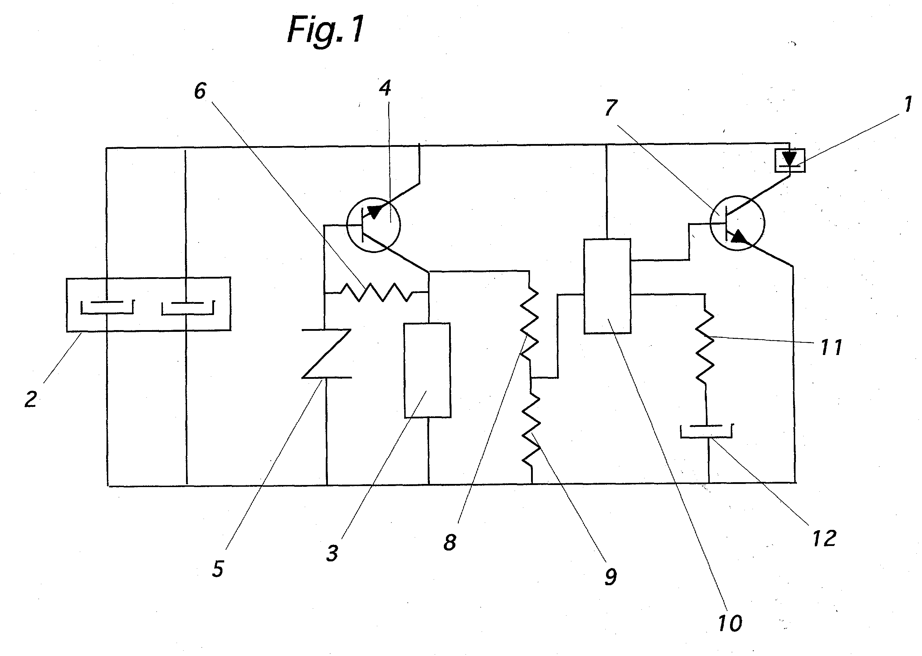

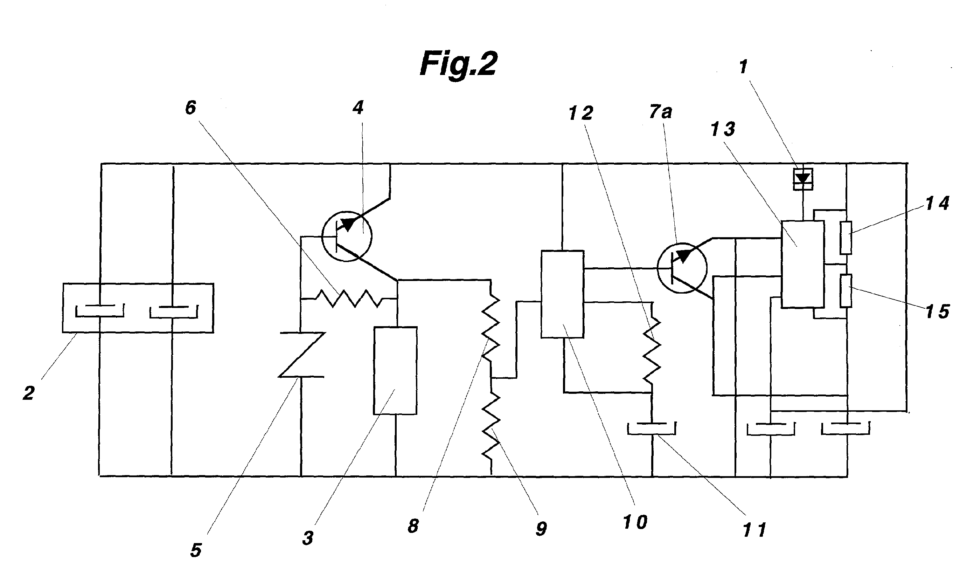

La figure 2 montre une variante permettant d'économiser l'énergie emmagasinée dans le condensateur 2. Ce dispositif est constitué, essentiellement, par un circuit intégré 13, placé sous la dépendance d'un transistor 7a, analogue à celui 7. Le circuit 13 permet d'alimenter les diodes 1 par intermittence. Le fonctionnement du transistor 7a est inversé par rapport à celui 7 de la figure 1.

Tant que la cellule est normalement éclairée, le circuit 10 rend le transistor 7a conducteur, ce qui a pour effet de bloquer le circuit 13.

Lorsque la tension aux bornes de la résistance 9 descend en dessous du seuil de réglage, le condensateur 12 se décharge et le transistor 7a se bloque, le circuit 13 connecte alors les diodes 1 et les condensateurs 2.

Il est à noter que le circuit 11-12 fonctionne de la même façon que décrite précédemment. Toutefois, les mêmes causes produisent des résultats inverses : dans ce mode de réalisation, la décharge du condensateur 1 2 provoque le blocage du transistor 7a.

Pour adapter la consommation d'énergie à celle disponible dans les condensateurs 2, des moyens sont prévus pour régler la fréquence du clignotement et la largeur de l'impulsion délivrée aux diodes 1. Ce résultat est obtenu en plaçant le circuit intégré 13 sous la dépendance de deux résistances 14 et 15, variables.

## Revendications

1. Dispositif d'alimentation de sources lumineuses (1 ), telles que des diodes électroluminescentes, à partir de condensateurs (2) chargés par l'entremise d'une cellule solaire (3), **caractérisé en ce que** dans le circuit cellule-condensateurs est interposé un interrupteur constitué par un transistor (4) dont la polarisation est obtenue par l'intermédiaire d'un pont résistance (6) -diode Zener (5), le seuil de déclenchement de ladite diode étant inférieur à la tension maximale susceptible d'être délivrée par la cellule solaire (3).

2. Dispositif selon la revendication 1, **caractérisé en ce que** les sources lumineuses sont connectées aux bornes des condensateurs (2) par l'entremise d'un dispositif de connexion (7 ou 7a-13) placé sous la dépendance d'un détecteur sensible à la luminosité ambiante et qui maintient ledit dispositif ouvert tant que la luminosité ambiante est suffisante.

3. Dispositif selon la revendication 2, **caractérisé en ce qu'**une fraction de la tension aux bornes de la cellule est appliquée à un circuit intégré (10) qui commande la fermeture du dispositif de connexion des sources lumineuses (1) si la valeur de la tension aux bornes de ladite cellule tombe en dessous de ladite valeur prédéterminée.

4. Dispositif selon la revendication 3, **caractérisé en ce qu'**une fraction de la tension aux bornes de la cellule est appliquée au circuit intégré par l'intermédiaire d'un pont de résistances (8-9).

5. Dispositif selon l'une quelconque des revendications 3 et 4, **caractérisé en ce que** des moyens sont prévus pour que la fermeture du dispositif de connexion n'ait lieu que si la valeur de la tension aux bornes de la cellule reste en dessous du seuil fixé pendant un certain temps.

6. Dispositif selon la revendication 5, **caractérisé en ce que** la tension aux bornes de la cellule charge, par l'entremise du circuit intégré (10) et d'une résistance (1 1 ), un condensateur (12) dont la tension est utilisée pour maintenir ouvert le dispositif de connexion.

7. Dispositif selon l'une quelconque des revendications 2 à 6, **caractérisé en ce que** le dispositif de connexion est constitué par un transistor (7a) qui bloque, lorsque la luminosité ambiante est suffisante, un circuit intégré (13), interposé entre les condensateurs (2) et les diodes (1 ), permettant d'alimenter lesdites diodes de façon intermittente, des moyens étant prévus pour faire varier le temps d'éclairement et celui d'extinction desdites diodes.
